# EUROPEAN PATENT APPLICATION

(11) **EP 3 016 433 A1**
(43) Date of publication of application: **04.05.2016**
(21) Application number: 13823913.2
(22) Date of filing: 18.12.2013
(51) Int. Cl.: H04W 28/16, H04W 40/24, H04W 72/04, H04W 84/18

(54) **WIRELESS COMMUNICATION DEVICE, WIRELESS COMMUNICATION SYSTEM, COMPUTER-READABLE RECORDING MEDIUM, AND WIRELESS COMMUNICATION METHOD**

(30) Priority: 28.06.2013 JP 2013137370
(71) Applicant: Kabushiki Kaisha Toshiba, Minato-ku Tokyo 105-8001 (JP)
(72) Inventor: NAKATANI, Hiroshi, Tokyo 105-8001 (JP); MORI, Toshiki, Tokyo 105-8001 (JP); OHNISHI, Naoya, Tokyo 105-8001 (JP); TAKANAKA, Tooru, Tokyo 105-8001 (JP); SAMEDA, Yoshito, Tokyo 105-8001 (JP); OCHIAI, Makoto, Tokyo 105-8001 (JP)
(74) Representative: Moreland, David
(86) International application number: PCT/JP2013/083872
(87) International publication number: WO 2014/207961

(57) **Abstract**

A wireless communication apparatus according to one embodiment is a wireless communication apparatus (10, 10A) which establishes a multi-hop wireless network together with other apparatuses, and makes wireless communication in a fixed cycle, includes a wireless unit, a storage unit, a communication control unit and a timetable additional recording unit. The wireless unit is configured to transmit/receive a radio signal via an antenna. The storage unit is configured to store timetable information indicating a time slot which permits transmission/reception of the radio signal. The communication control unit is configured to control transmission/reception of the radio signal according to the timetable information. The timetable additional recording unit is configured to assign and additionally record transmission/reception tasks of the wireless communication apparatus of interest in empty time slots of the timetable information which is shared with the other apparatuses.

## Description

### Technical Field

Embodiments described herein relate generally to a wireless communication apparatus, which makes wireless communications by establishing a multi-hop wireless network, a wireless communication system, a computer-readable recording medium, and a wireless communication method.

### Background Art

A multi-hop wireless network in which not only wireless communication apparatuses directly communicate with each other, but also communicate with wireless communication apparatuses in a broader range via another wireless communication apparatus, is known. In this multi-hop network, when individual wireless communication apparatuses make wireless transmission at unique timings, and when transmission timings accidentally match, a communication collision occurs, and normal transmission/reception cannot be made, thus requiring retransmission. As a technique for avoiding such communication collision, a timetable synchronization communication method is known.

In this timetable synchronization communication method, since transmission or reception is made only in time slots fixed up in advance by wireless communication apparatuses which participate in a communication, a communication collision between wireless communication apparatuses in a single network can be avoided, and unexpected prolongation of a required communication time can be suppressed. With this feature, the timetable synchronization communication method is increasingly applied in the field such as a wireless network for a control system, which suffers a restriction in a maximum update cycle of data.

As an example of the timetable synchronization communication method, patent literature 1 is known. Patent literature 1 discloses a technique for wireless communication by synchronizing transmission/reception timing to fixed-length time slot between wireless communication apparatuses. The technique allows the wireless communication apparatuses to make collision-free synchronized communications, and activates a transmission/reception unit in only required time slots, thereby reducing a power consumption amount.

### Citation List

### Patent Literature

Patent Literature 1: Jpn. Pat. Appln. KOKAI Publication No. 2011-176888

### Summary of Invention

### Technical Problem

When a wireless channel (wireless communication frequency band), which can be used by the entire network of the timetable synchronization communication method, is limited to one frequency band, one timetable has to be shared in one whole multi-hop wireless network. Under this condition, for a time required to allow the timetable of the multi-hop wireless network to go round (to be referred to as "1-cycle time" hereinafter), a relation "1-cycle time = total number of transmission/reception tasks of network x unit time for assignment" holds. Since communication data on a network is updated for each 1-cycle time, a data update cycle = 1-cycle time.

In this case, a configuration, in which in a network in which wireless communication apparatuses are distributed over a wide area, even when wireless communication apparatuses which exist at remote places simultaneously make transmission, a communication collision never occurs, is available. However, in the conventional timetable synchronization communication method, even in the configuration in which a communication collision never occurs, since respective apparatuses do not make transmission at the same timing, the 1-cycle time is prolonged in proportion to the number of apparatuses.

An object of this embodiment is to provide a wireless communication apparatus which can autonomously generate a transmission/reception schedule which avoids a communication collision in a network and can shorten a communication cycle in a configuration in which wireless communication apparatuses are distributed over a wide area, a wireless communication system, a computer-readable recording medium, and a wireless communication method.

### Solution to Problem

According to this embodiment, a wireless communication apparatus which establishes a multi-hop wireless network together with other apparatuses, and makes wireless communication in a fixed cycle, includes a wireless unit, a storage unit, a communication control unit and a timetable additional recording unit. The wireless unit is configured to transmit/receive a radio signal via an antenna. The storage unit is configured to store timetable information indicating a time slot which permits transmission/reception of the radio signal. The communication control unit is configured to control transmission/reception of the radio signal according to the timetable information. The timetable additional recording unit is configured to assign and additionally record transmission/reception tasks of the wireless communication apparatus of interest in empty time slots of the timetable information which is shared with the other apparatuses.

### Brief Description of Drawings

[FIG. 1] FIG. 1 is a view showing a configuration example of a wireless communication system according to the first embodiment.
[FIG. 2] FIG. 2 is a functional block diagram of a wireless communication apparatus according to the first embodiment.
[FIG. 3] FIG. 3 is a functional block diagram of a wireless communication apparatus (main arbitration apparatus) according to the first embodiment.
[FIG. 4A] FIG. 4A is a view showing a connection example of this wireless communication system and an external system.
[FIG. 4B] FIG. 4B is a view showing a network configuration example of the external system.
[FIG. 5] FIG. 5 is a view showing an example of timetable information.
[FIG. 6] FIG. 6 is a view showing timetable information already assigned up to a wireless communication apparatus A.
[FIG. 7] FIG. 7 is a view showing timetable information added with information of influenced apparatuses of the wireless communication apparatus A.
[FIG. 8] FIG. 8 is a view showing timetable information already assigned up to a wireless communication apparatus C.
[FIG. 9] FIG. 9 is a view showing timetable information added with information of influenced apparatuses of the wireless communication apparatus C.
[FIG. 10] FIG. 10 is a view showing timetable information already assigned up to a wireless communication apparatus D.
[FIG. 11] FIG. 11 is a block diagram showing the functional arrangement of a wireless communication apparatus (main arbitration apparatus) according to the second embodiment.

### Description of Embodiments

A wireless communication apparatus, wireless communication system, and wireless communication method according to this embodiment will be described hereinafter with reference to the drawings.

### (First Embodiment)

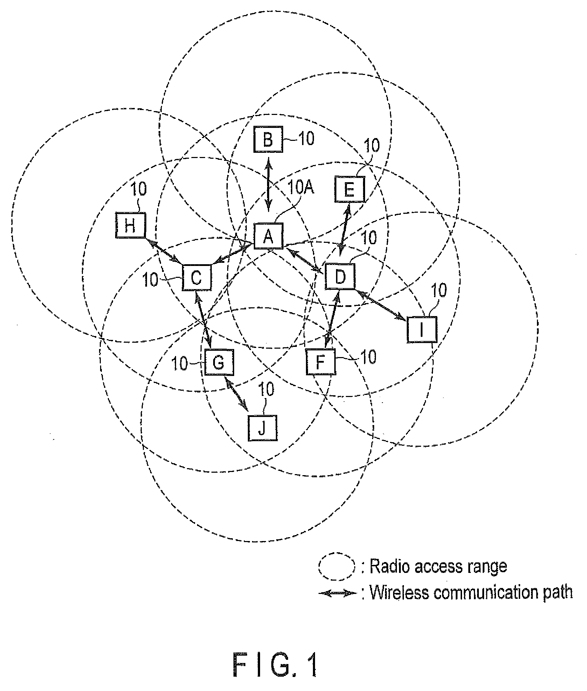

Fig. 1 is a view showing a configuration example of a wireless communication system according to the first embodiment. This wireless communication system is configured as a multi-hop type wireless network (multi-hop wireless network) including a plurality of wireless communication apparatuses A to J. As shown in FIG. 1, the respective wireless communication apparatuses autonomously establish wireless communication paths between those which exist within their radio access ranges. Each of the wireless communication apparatuses B to J, which configure this wireless communication system, is configured by a wireless communication apparatus 10 (to be described later), and the wireless communication apparatus A is configured by a wireless communication apparatus 10A (to be described later) to operate as a main arbitration apparatus. Note that FIG. 1 shows a tree type topology centering on the wireless communication apparatus A, but a mesh type topology in which the wireless communication apparatuses A to J are connected via a plurality of communication paths may be configured in addition to the tree type.

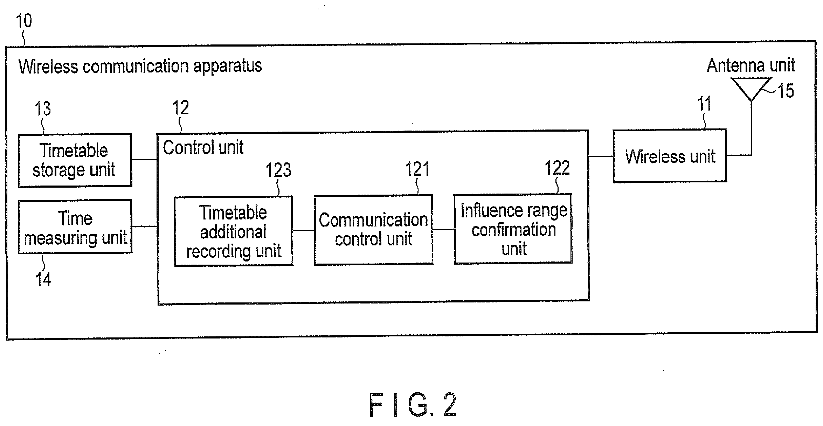

FIG. 2 is a functional block diagram of the wireless communication apparatus 10. The wireless communication apparatus 10 includes a wireless unit 11, control unit 12, timetable storage unit 13, time measuring unit 14, and antenna unit 15. A wireless network establishment function for autonomously establishing a multi-hop wireless network may be included in the control unit 12, or may be included in another unit in the wireless communication apparatus 10.

The wireless unit 11 transmits/receives, via the antenna unit 15, radio signals to/from other wireless communication apparatuses which exist within a radio access range of the self-apparatus. The timetable storage unit 13 stores timetable information indicating execution timings of transmission/reception tasks of radio signals. The timetable information is shared between wireless communication apparatuses which belong to this system. That is, all the wireless communication apparatuses in the multi-hop wireless network possess common timetable information. The time measuring unit 14 generates a reference clock which is used for control of execution timings of transmission/reception tasks of radio signals.

The control unit 12 includes a communication control unit 121, influence range confirmation unit 122, and timetable additional recording unit 123. The communication control unit 121 manages a 1-cycle time required to execute all transmission/reception tasks registered in the timetable information. The influence range confirmation unit 122 communicates with wireless communication apparatuses to acquire information of influencing apparatuses so as to confirm the existence of other wireless communication apparatuses which exist within the radio access range of the self-apparatus. Also, the information of the influencing apparatuses is shared by all the wireless communication apparatuses before execution of time arbitration via inter-wireless communication apparatus communications by means of the wireless network establishment function. The timetable additional recording unit 123 additionally records time slots to which transmission/reception tasks are assigned in the timetable information based on the information of the influencing apparatuses shared by all the wireless communication apparatuses.

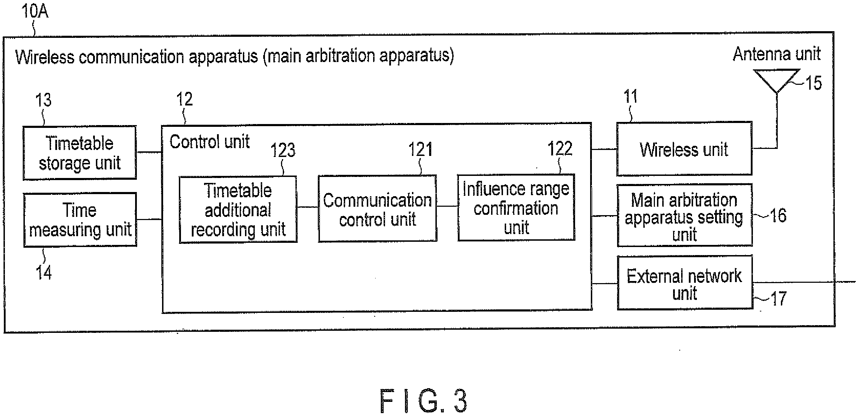

FIG. 3 is a functional block diagram of the wireless communication apparatus 10A which operates as a main arbitration apparatus. The wireless communication apparatus 10A includes a wireless unit 11, control unit 12, timetable storage unit 13, time measuring unit 14, and antenna unit 15 as in the arrangement of the wireless communication apparatus 10, and further includes a main arbitration apparatus setting unit 16 and external network unit 17.

The main arbitration apparatus setting unit 16 is implemented as a function including physical switches and/or means of communication with apparatuses outside the self-apparatus, and the wireless communication apparatus 10A set as a main arbitration apparatus operates as the main arbitration apparatus of time arbitration procedures of this system. As the wireless communication apparatus 10A which operates as the main arbitration apparatus of the time arbitration procedures, for example, a wireless communication apparatus having a smallest apparatus number may be autonomously set via communications between wireless communication apparatuses by a given rule without requiring any manual operations of the main arbitration apparatus setting unit 16 or the like.

The external network unit 17 is a connection interface for connection with a system outside this system. The wireless communication apparatus 10A also functions as a gateway for data transmission/reception between apparatuses inside and outside the system, since it includes the external network unit 17.

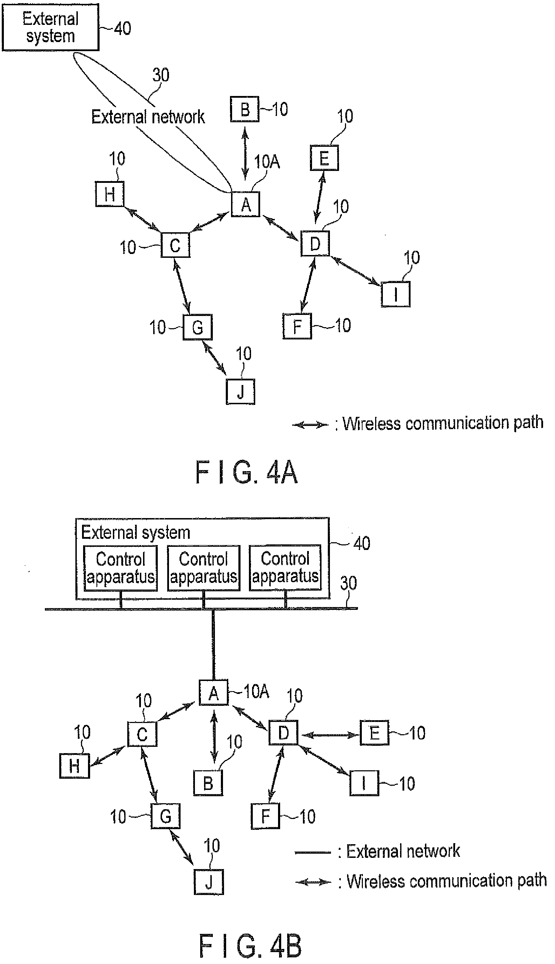

FIG. 4A shows the relationship between this system and elements outside the system. The elements outside the system include an external network 30, and an external system 40 connected to this system via the external network 30. The external network 30 is connected to this system via the wireless communication apparatus 10A which operates as the main arbitration apparatus.

FIG. 4B shows a network configuration example of the external system 40 and this system. As shown in FIG. 4B, the external system 40 can include one or more control apparatuses. Such a multi-hop wireless network is applicable to application in a control system of the social infrastructure field. To the wireless communication apparatuses A to J, for example, input/output devices such as sensors and/or motors are connected. For example, each control apparatus of the external system 40 can collect sensor information from the wireless communication apparatuses A to J via the external network 30, and can transmit control signals required to control motors and the like to the wireless communication apparatuses A to J via the external network 30.

Next, the time arbitration procedures of the wireless communication system with the above configuration will be described below. The wireless communication apparatuses 10 and 10A make wireless communications free from any communication collision by the time arbitration procedures for embedding transmission/reception tasks of respective wireless communication apparatuses on the timetable information shared between the wireless communication apparatuses.

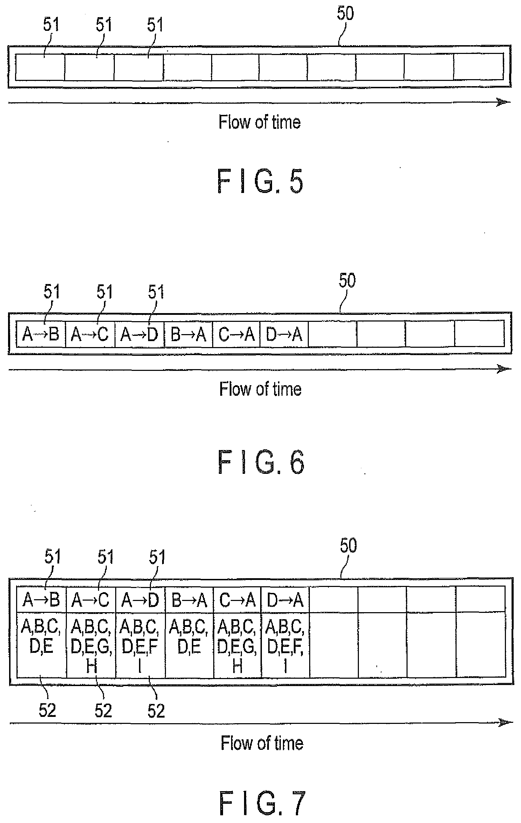

FIG. 5 shows an example of timetable information. Timetable information 50 indicates execution timings of transmission/reception tasks shared by the wireless communication apparatuses 10 and 10A which belong to this system. Each individual transmission/reception task is executed in a time slot 51 in the timetable information 50. Transmission/reception tasks assigned to different time slots 51 do not influence each other's wireless communications.

The wireless communication apparatuses 10 and 10A recognize wireless communication paths established by the wireless network establishment function via inter-wireless communication apparatus communications by the wireless network establishment function before execution of time arbitration. Especially, the wireless communication apparatus 10A which operates as the main arbitration apparatus recognizes all wireless paths in the wireless network. For example, in FIG. 1, the wireless communication apparatus A recognizes that it can make wireless communications with the wireless communication apparatuses B, C, and D, and the wireless communication apparatuses E, F, and I are connected ahead of the wireless communication apparatus D.

In the time arbitration procedures, the wireless communication apparatus 10A which operates as the main arbitration apparatus assigns time slots 51 to the timetable information 50 first. The timetable additional recording unit 123 of the wireless communication apparatus A assigns transmission/reception tasks with the wireless communication apparatuses B, C, and D to which the self-apparatus has to assign time slots and which have the wireless communication paths with the self-apparatus in unassigned time slots in the timetable information.

FIG. 6 shows a state in which transmission/reception tasks between the wireless communication apparatus A and wireless communication apparatuses B, C, and D as those to be assigned by the wireless communication apparatus A have been assigned to unassigned time slots. In this case, the wireless communication apparatus A may add information of wireless communication apparatuses 10 influenced by transmission/reception tasks (to be referred to as influenced apparatuses hereinafter) in addition to the transmission/reception tasks to the timetable information 50.

FIG. 7 shows an example of timetable information when information of influenced apparatuses is added. In the timetable information 50 shown in FIG. 7, information 52 of influenced apparatuses is added to a transmission/reception task assigned to each time slot 51. For example, in FIG. 1, a second transmission/reception task A → C from the left end describes information of wireless communication apparatuses within radio access ranges of the transmitting apparatus A and receiving apparatus C. For example, all of the wireless communication apparatuses B, C, D, and E which are influenced by a wireless transmission at a transmission timing from the wireless communication apparatus A (which may cause communication collisions when they transmit signals at the same timing or may receive radio waves from the wireless communication apparatus A when they receive signals at the same timing), and the wireless communication apparatuses A, H, and G which may influence wireless reception at a reception timing of the wireless communication apparatus C (which may cause communication collisions when they transmit signals at the same timing or may receive radio waves from the wireless communication apparatus C when they receive signals at the same timing) are registered as the influenced apparatus information 52 in the timetable information.

The registration procedures of the influenced apparatus information 52 will be described below. The influence range confirmation unit 122 of the control unit 12 of each wireless communication apparatus 10 makes communications between the wireless communication apparatuses 10 so as to confirm other wireless communication apparatuses 10 which exist in a radio access range shown in FIG. 1. Another wireless communication apparatus 10, which receives a location notification signal transmitted from the influence range confirmation unit 122 of a transmitting wireless communication apparatus 10, controls the influence range confirmation unit 122 of the self-apparatus to register information of a transmission source apparatus (information of an influencing apparatus). Information of influencing apparatuses included in each wireless communication apparatus 10 is shared by all wireless communication apparatuses before execution of time arbitration by inter-wireless communication apparatus communications by the wireless network establishment function. The timetable additional recording unit 123 of the wireless communication apparatus A can add influenced apparatus information 52 at the aforementioned transmission and reception timings based on the influencing apparatus information shared by all the wireless communication apparatuses.

Next, upon completion of assignment of transmission/reception tasks, the wireless communication apparatus 10A which operates as the main arbitration apparatus transmits the timetable information to the wireless communication apparatuses having wireless communication paths with the self-apparatus. Then, each wireless communication apparatus which receives the timetable information additionally assigns transmission/reception tasks to be assigned by the self-apparatus to the timetable information. Then, after assignment, the wireless communication apparatus returns the assigned timetable information to the wireless communication apparatus 10A.

In the example of FIG. 1, upon completion of assignment of transmission/reception tasks to the timetable information, the wireless communication apparatus A transmits the timetable information to the wireless communication apparatus B. In this case, the timetable additional recording unit 123 of the wireless communication apparatus B recognizes that transmission/reception tasks A → B and B → A to be assigned have already been registered, stores the timetable information in the timetable storage unit 13, and returns the timetable information to the wireless communication apparatus A.

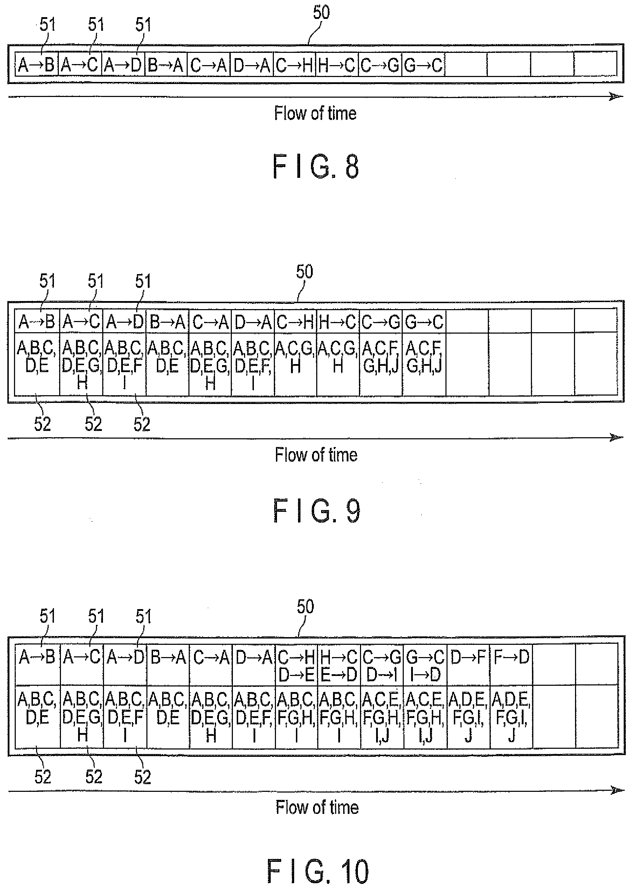

Next, the wireless communication apparatus A transmits the timetable information to the wireless communication apparatus C. As shown in FIG. 8, the timetable additional recording unit 123 of the wireless communication apparatus C recognizes that transmission/reception tasks A → C and C → A have already been registered in the timetable information, and additionally records transmission/reception tasks C → H, H → C, C → G, and G → C, which are not registered yet, in empty time slots of the timetable information. FIG. 9 shows timetable information added with information of influenced apparatuses of the wireless communication apparatus C. Then, the wireless communication apparatus C stores the timetable information in the timetable storage unit 13, and returns the additionally recorded timetable information to the wireless communication apparatus A.

In this way, the wireless communication apparatus 10A which operates as the main arbitration apparatus transmits the timetable information to the wireless communication apparatuses having the wireless communication paths to the self-apparatus in an order they are connected to the self-apparatus, thus proceeding with assignment of transmission/reception tasks to the timetable information in the respective wireless communication apparatuses. In the example of FIG. 1, upon completion of additional recording of the timetable information by the last wireless communication apparatus G, all transmission/reception tasks of the wireless communication apparatuses E, F, H, I, and J located at the end of the network have been assigned, thus completing the timetable information of the whole system. After completion of the timetable information, when a transmission/reception task related to the self-apparatus is registered in a time slot described in the timetable information, each wireless communication apparatus 10 which belongs to the system executes related transmission/reception processing. With the aforementioned mechanism, wireless communications free from any collision in the system are realized.

Note that the timetable additional recording unit 123 of the wireless communication apparatus 10 can redundantly assign a transmission/reception task, which is not related to the influenced apparatus information 52, in a time slot to which the transmission/reception task has already been assigned upon assignment of transmission/reception tasks to the timetable information. The assignment procedures in this case will be described below with reference to FIG. 9.

FIG. 9 shows timetable information for which assignment is complete up to the wireless communication apparatus C. In this case, the timetable information is transmitted to the wireless communication apparatus D. The wireless communication apparatus D recognizes that transmission/reception tasks A → D and D →a A have already been registered in the timetable information, and registers transmission/reception tasks D → E, E → D, D → F, F → D, D → I, and I → D, which are not registered yet, in the timetable information. The timetable additional recording unit 123 of the wireless communication apparatus D searches the timetable information for a time slot 51 in which the transmission/reception task D → E (transmitting apparatus D and receiving apparatus E) is not described in the influenced apparatus information 52. As a result, the timetable additional recording unit 123 detects that the wireless communication apparatuses D and E are not registered in the influenced apparatus information 52 in four time slots of C → H, H → C, C → G, and G → C. This indicates that even when the task D → E is executed in that time slot at the same time, each other's wireless communications do not influence each other. Likewise, FIG. 1 expresses this fact as a state in which wireless transmission ranges of the wireless communication apparatuses D and E do not overlap those of the wireless communication apparatuses C, H, and G.

Hence, the wireless communication apparatus D can redundantly assign a transmission/reception task D → E in one of the four time slots C → H, H → C, C → G, and G → C. When tasks are redundantly assigned, the timetable additional recording unit 123 corrects the influenced apparatus information 52 according to the redundant assignment result. FIG. 10 shows timetable information for which assignment is complete up to the wireless communication apparatus D. As can be seen from FIG. 10, transmission/reception tasks are redundantly assigned to four time slots C → H, H → C, C → G, and G → C, and pieces of influenced apparatus information 52 of corresponding time slots are added to that shown in FIG. 9.

As described above, according to the first embodiment, in procedures for autonomously creating a timetable in a fixed-cycle wireless communication system, since wireless communication apparatuses recognize transmission/reception tasks which do not collide against each other, a transmission/reception schedule which avoids communication collisions can be created. Furthermore, since the wireless communication apparatus includes the influence range confirmation unit, and the timetable information includes communication influenced apparatus information, a transmission/reception schedule in which a plurality of transmission/reception tasks are redundantly assigned to a single time slot can be created. Thus, the 1-cycle time required to execute all transmission/reception tasks can be shortened compared to a case in which tasks are not redundantly assigned. Therefore, the transmission/reception schedule which avoids communication collisions in the network can be autonomously created, and in the configuration in which wireless communication apparatuses are distributed over a wide area, a wireless communication system which can shorten a communication cycle can be realized.

### (Second Embodiment)

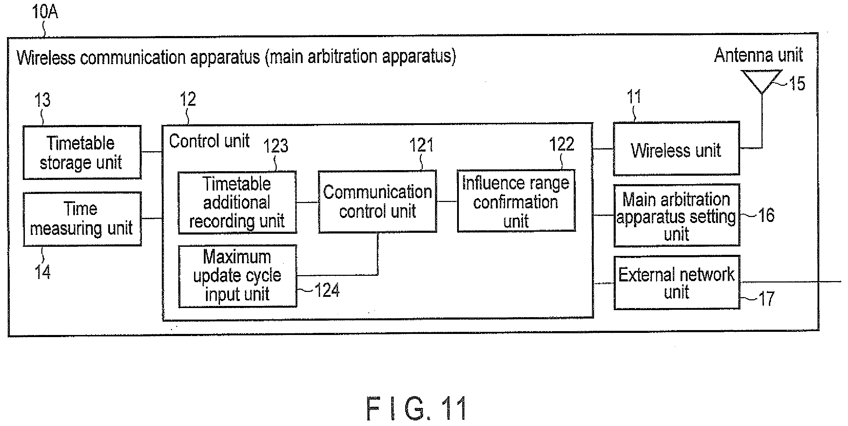

A wireless communication apparatus (main arbitration apparatus) 10A according to the second embodiment shown in FIG. 11 includes a maximum update cycle input unit 124 in addition to the arrangement shown in FIG. 3. The maximum update cycle input unit 124 is a function for inputting, from outside of the self-apparatus, a maximum update cycle as a restriction condition of one cycle required to execute all transmission/reception tasks registered in timetable information as a function including a communication means with apparatuses outside of the self-apparatus.

In the aforementioned arrangement, a communication control unit 121 of the wireless communication apparatus 10A as the main arbitration apparatus compares a 1-cycle time required to execute all transmission/reception tasks registered in timetable information with a maximum update cycle to determine whether or not the 1-cycle time based on the timetable information generated according to the assignment result exceeds the set maximum update cycle.

As describe above in the first embodiment, the wireless communication apparatus 10A as the main arbitration apparatus recognizes all wireless communication paths by a wireless network establishment function. When tasks are not redundantly assigned to a single time slot upon creation of a timetable, since a relation "1-cycle time = total number of transmission/reception tasks in network x unit time for assignment" holds for the 1-cycle time, the wireless communication apparatus 10A which operates as the main arbitration apparatus can determine whether or not the 1-cycle time (a total required time of the timetable information) when redundant assignment is not made exceeds the set maximum update cycle, before creation of the timetable information.

In the second embodiment, when transmission/reception tasks are assigned to timetable information in each wireless communication apparatus 10, and when it is expected that the 1-cycle time without any redundant assignment exceeds the maximum update time, redundant assignment of transmission/reception tasks is executed; when the 1-cycle time does not exceed the maximum update cycle, redundant assignment is skipped. As for judgment as to whether or not to execute redundant assignment, a redundant assignment execution instruction as a judgment result of the wireless communication apparatus 10A, which operates as the main arbitration apparatus, may be received upon reception of the timetable information from the wireless communication apparatus 10A. Alternatively, whether or not to execute redundant assignment may be judged based on wireless communication paths recognized by the respective wireless communication apparatus and the timetable information.

As described above, according to the second embodiment, even when a system suffers a maximum update cycle restriction, a plurality of transmission/reception tasks are assigned to a single time slot of timetable information, that is, for example, transmission/reception tasks between apparatuses, which do not correspond to influenced apparatuses of that time slot, are redundantly assigned until the 1-cycle time required to execute all transmission/reception tasks falls below the maximum update cycle, thus allowing communications which fall below the maximum update cycle and are free from any collisions. Thus, in a multi-hop wireless network which suffers a maximum update cycle restriction, a fixed-cycle wireless communication system which can automatically create a timetable which meets the restriction without decreasing the number of apparatuses which participate in the multi-hop wireless network and can make communications, can be provided.

Note that some embodiments of the present invention have been described. These embodiments are presented only for the purpose of example, and do not intend to limit the scope of the invention. These novel embodiments can be carried out in various other aspects, and various omissions, replacements, and changes can be made without departing from the spirit of the invention. These embodiments and modifications are included in the scope and spirit of the invention, and are also included in inventions described in the scope of the claims and their equivalent scopes.

## Claims

1. A wireless communication apparatus which establishes a multi-hop wireless network together with other apparatuses, and makes wireless communication in a fixed cycle, comprising:
a wireless unit (11) configured to transmit/receive a radio signal via an antenna;
a storage unit (13) configured to store timetable information indicating a time slot which permits transmission/reception of the radio signal;
a communication control unit (121) configured to control transmission/reception of the radio signal according to the timetable information; and
a timetable additional recording unit (123) configured to assign and additionally record transmission/reception tasks of the wireless communication apparatus of interest in empty time slots of the timetable information which is shared with the other apparatuses.

2. The wireless communication apparatus according to claim 1, wherein the wireless communication apparatus operates as a main arbitration apparatus, initially starts assignment of the transmission/reception tasks, and assigns the transmission/reception tasks in an order of neighboring apparatuses within a radio access range.

3. The wireless communication apparatus according to claim 1 or 2, further comprising an influence range confirmation unit (122) configured to acquire influencing apparatus information required to confirm existence of other apparatuses which exist within the radio access range,
wherein the timetable additional recording unit assigns the transmission/reception tasks so as not to cause any communication collision based on the influencing apparatus information.

4. The wireless communication apparatus according to claim 1 or 2, wherein the timetable information further includes influenced apparatus information of the transmission/reception tasks for respective time slots to which the transmission/reception tasks are assigned, and
the timetable additional recording unit assigns the transmission/reception tasks so as not to cause any communication collision based on the influenced apparatus information.

5. The wireless communication apparatus according to claim 4, wherein the timetable additional recording unit redundantly assigns, to a time slot to which the transmission/reception task has already been assigned, a transmission/reception task between apparatuses which do not correspond to influenced apparatuses in that time slot in the timetable information.

6. The wireless communication apparatus according to claim 1, further comprising a maximum update cycle input unit configured to input a maximum update cycle to be satisfied by the timetable information,
wherein the communication control unit determines whether or not a total required time of the timetable information exceeds the maximum update cycle.

7. The wireless communication apparatus according to claim 6, wherein when the total required time of the timetable information exceeds the maximum update cycle, the communication control unit redundantly assigns, to time slots to which the transmission/reception tasks have already been assigned, transmission/reception tasks between apparatuses which do not correspond to influenced apparatuses in these time slots of the timetable information until the total required time of the timetable information falls below the maximum update cycle.

8. A wireless communication wireless communication system comprising a plurality of wireless communication apparatuses according to any one of claims 1 to 7.

9. A computer-readable recording medium for executing processes of respective units of a wireless communication apparatus according to any one of claims 1 to 7.

10. A wireless communication method used in an apparatus, which establishes a multi-hop wireless network together with other apparatuses, and makes wireless communication in a fixed cycle, the method comprising:
transmitting/receiving a radio signal via an antenna;
storing timetable information indicating a time slot which permits transmission/reception of the radio signal;
controlling transmission/reception of the radio signal according to the timetable information; and
assigning and additionally recording transmission/reception tasks of the wireless communication apparatus of interest in empty time slots of the timetable information which is shared between a plurality of wireless communication apparatuses.
